# EUROPEAN PATENT SPECIFICATION

(11) **EP 1 854 574 B1**
(45) Date of publication and mention of the grant of the patent: **26.10.2011**
(21) Application number: 06712159.0
(22) Date of filing: 23.01.2006
(51) Int. Cl.: B23K 9/29

(54) **GAS NOZZLE FOR ARC WELDING**
GASDÜSE ZUM LICHTBOGENSCHWEISSEN
BUSE A GAZ POUR SOUDAGE A L'ARC

(30) Priority: 15.02.2005 JP 2005037413
(43) Date of publication of application: 14.11.2007
(73) Proprietor: Fuji Jukogyo Kabushiki Kaisha, Tokyo 160-8316 (JP)
(72) Inventor: CHIGIRA, Mitoshi, Shinjuku-ku, Tokyo, 160-8316 (JP)
(74) Representative: Sajda, Wolf E.
(86) International application number: PCT/JP2006/300943
(87) International publication number: WO 2006/087887

(56) References cited:
- JP-A- 61 046 375
- JP-A- 61 060 276
- JP-A- 61 296 969
- JP-A- 2000 237 873
- JP-A- 2000 509 332
- US-A- 3 698 646

## Description

### Field of the invention

The present invention relates to a gas nozzle attached to, for example, a welding torch of a consumable electrode mode arc welder. In particular, the invention relates to a gas nozzle as defined in the preamble of claim 1.

### Background of Invention

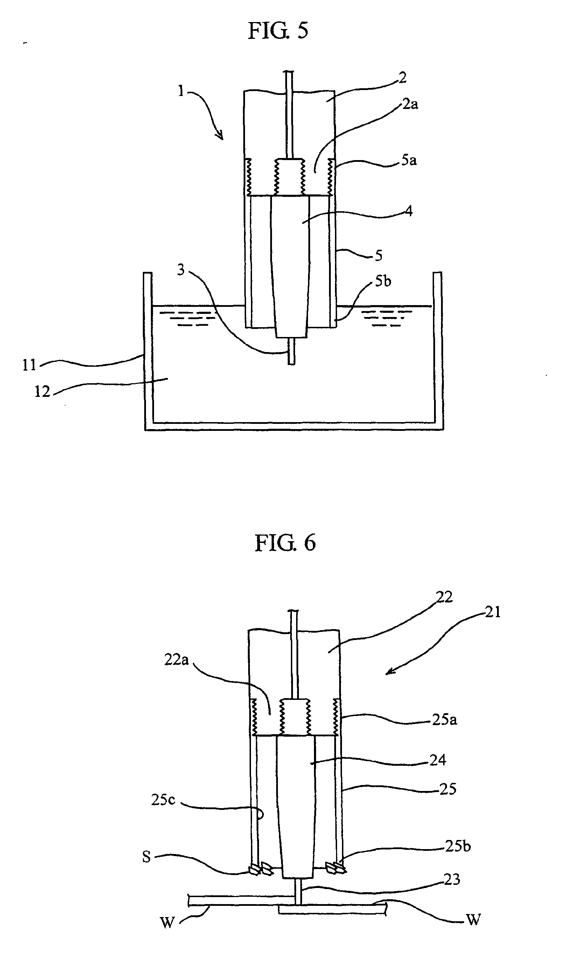

As consumable electrode mode arc welding such as MIG welding, a welding torch 21 as shown in a schematic section view of Fig. 6 is used. In the welding torch 21, a contact tip 24 made of metal for feeding a welding wire 23 as a consumable electrode is removably screwed to the tip portion 22a of an insulating torch head 22, and simultaneously a base portion 25a of a gas nozzle 25 made of metal is removably screwed to the tip portion 22a of the insulating torch head 22 so as to surround the contact tip 24. Moreover, the welding wire 23 is used as plus-side electrode and a workpiece W of material to be welded is used as minus-side electrode, and arc is generated between the welding wire 23 and the workpiece W while inert gas such as argon gas as shield gas is fed to the inside of the gas nozzle 25, and then the heat by the arc melts the welding wire 23 to weld the two workpieces W.

In the arc welding using the welding torch 21, the operation of welding brings about dispersal of a great amount of spatters S consisting of small particles of molten metal, and a part of the spatters S adheres to and deposits on a tip portion 25b corresponding to gas discharge side of the gas nozzle 25 and an inner surface 25c of the nozzle. The spatters S deposited on the gas nozzle 25 inhibit a flow of the shield gas to reduce the shield property on the welding, whereby porosities such as blowholes or pits are apt to occur on the welded portions to bring about reduction of welding quality.

Further, the spatters S also adhere to and deposit on a surface of the contact tip 24, and connect with the spatters S deposited on the gas nozzle 25, and hence the contact tip 24 and the gas nozzle 25 are electrically connected with each other. Thus, when the tip portion 25b of nozzle of the gas nozzle 25 is brought into contact with the workpiece W, short-circuits and sparks by the contact occur, whereby there is possibility of burning of the welding torch 21 or damage of the workpiece W.

In order to reduce a deposited amount of the spatters S on the welding torch 21, for example, Patent Document 1 proposes a gas nozzle made of ceramic, Patent Document 2 proposes formation of a ceramic covering layer on a surface of a contact tip 24, or Patent Document 3 proposes formation of a metal layer having a high melting point (m.p. 2,500 °C) on a surface of a contact tip 24.

Furthermore, to prevent short between a gas nozzle 25 and a workpiece W, for example, Patent Document 4 proposes that an insulating resin is covered on a surface of a contact (electrode) tip 24 and/or an inner surface of a gas nozzle 25.

### List of Patent Documents:

| | |
|---|---|
| Patent Document 1: | JP61-111 783A |
| Patent Document 2: | JP61-296 969A |
| Patent Document 3: | JP63-066 577U |
| Patent Document 4: | JP05-005 272U |

### Summary of the Invention

### Problem to be solved by the invention

However, in case a gas nozzle 25 made of ceramic is adopted as described the Patent Document 1, the gas nozzle has a tendency to increase cost. Further, in case a gas nozzle 25 having a ceramic covering layer or a high melting point metal layer formed on a surface of a contact tip 24 is adopted as described the Patent Document 2 or 3, a process for formation of the layer is required for the preparation of the contact tip to bring about increase of cost.

In case a gas nozzle 25 having an insulating resin covered on a surface of a contact tip 24 and /or an inner surface of the gas nozzle is adopted as described in Patent Document 2, electric connection (short) between the contact tip 24 and gas nozzle 25 via spatters S can be prevented but it is difficult to prevent the adhesion and deposition of the spatters S to the contact tip 24 and the gas nozzle 25. Therefore the deposition of the spatters S inhibits a flow of a shield gas whereby porosity occurs on a welded portion to lower welding quality. Further, in order to prevent lowering of the welding quality, it is required to remove the deposited spatters S by frequent cleaning of the gas nozzle 25 to reduce welding workability.

A gas nozzle as defined in the preamble of claim 1 is known, for example, from US-A-2 827 550. In the conventional device, the nozzle is formed of a heat-resistant thermosetting resin which is reinforced by a fibrous material, such as paper, glass, asbestos or the like. According to the prior art, the resin may take the form of a heat resistant polyester, phenolic, urea, silicone or melamine-type resin or an epoxy resin blend using a heat resistant curing agent.

Since the nozzle surrounds a consumable electrode which is fed to a workpiece to be welded, the nozzle is combusted by the spatter from the arc created between the workpiece and the consumable electrode. Therefore, it is recommended in the document to use a high rate of welding and a small bead width. When the bead width is small, the molden puddle is small so that the nozzle is not in close proximity to the puddle.

Thus, in view of the above-mentioned circumstances, the object of the present invention is to provide a gas nozzle for arc welding that can be simply and cheaply obtained, reduced in deposition of spatters, and improved in welding quality and welding workability.

### Means for Solving the Problem

The present invention provides a gas nozzle removably attached to a tip portion of a torch head of a welding torch so as to surround a contact tip for feeding a welding wire, a tip portion on at least a gas discharge side of the gas nozzle comprising material that is capable of carbonizing due to weld spatters adhered to the material and allowing the carbonized material together with the spatters to fall down, and is **characterized in that** the material of the gas nozzle has been impregnated with oil.

In a specific embodiment of the gas nozzle, the entire gas nozzle is formed from the material.

In a specific embodiment of the gas nozzle, the material is paper board that has been impregnated with oil.

In a still further embodiment of the gas nozzle, the gas nozzle comprises a base side nozzle made of metal and a tip side nozzle made of the material, wherein a base portion of the base side nozzle is removably attached to the tip portion of a torch head and a base portion of the tip side nozzle is removably attached to the tip portion of the base side nozzle.

### Effect of the invention

According to the gaz nozzle of the invention, when spatters shattered during a welding operation are adhered to and deposited on at least a tip portion of a nozzle of a gas nozzle, the spatters-deposited portion carbonizes due to heat of the spatters and the carbonized portion exfoliates and falls together with the spatters from the tip, whereby the amount of spatters deposited on the gas nozzle can be reliably reduced. Hence, the gas nozzle is free from the defect that the deposition of the spatters inhibits a flow of a shield gas, and therefore shield effect by the shield gas can be ensured, which brings about no occurrence of porosity on the welded portion to enhance welding quality.

Further, material capable of carbonizing owing to weld spatters adhered to the material and allowing the carbonized material together with the spatters to fall can be formed from, for example, paper-like material, such as paper board which can be used in cardboard, woodfiber, nonwoven, or synthetic paper, and therefore can be simply and cheaply obtained, and simultaneously when the carbonized portion of the material comes to increase owing to the deposition of weld spatters, the material have only to be changed with new one, and therefore it is possible to dispense with cleaning operation of the gas nozzle to greatly improve welding workability. With such a gas nozzle, the use of the material impregnated with oil effectively reduces the deposited and carbonized amounts of spatters to bring about longer operating life of the gas nozzle.

According to a specific embodiment of the invention, the whole of the gas nozzle is made of the material capable of carbonizing owing to weld spatters adhered to the material and allowing the carbonized material together with the spatters to fall, and hence the amount of spatters deposited on the whole of the gas nozzle is reduced to enable improvement of welding quality and workability.

According to a specific embodiment of the invention, the use of paper board as the material renders the preparation of a gas nozzle simple and cheap.

According to a specific embodiment of the invention, only a tip side nozzle, which forms a tip portion of a gas discharge side of a gas nozzle to which spatters are apt to adhere, is formed from the material capable of carbonizing owing to weld spatters adhered to the material and allowing the carbonized material together with the spatters to fall, whereby the deposited amount of the spatters can be effectively reduced and simultaneously the tip side nozzle can be changed with a new one to enable the gas nozzle to be prepared more simply and cheaply.

### Brief Description of the Drawings

- Fig. 1: is a schematic section view showing a welding torch provided with a gas nozzle according to a first embodiment of the invention.
- Fig. 2: is a schematic section view showing a welding torch provided with a gas nozzle according to a second embodiment of the invention.
- Fig. 3: is a schematic section view showing a welding torch provided with a gas nozzle according to a third embodiment of the invention.
- Fig. 4: is a schematic section view showing a welding torch provided with a gas nozzle according to a fourth embodiment of the invention.
- Fig. 5: is a view for explaining an example of usage pattern of a welding torch provided with a gas nozzle according to a fifth embodiment of the invention.
- Fig. 6: is a schematic section view showing a conventional welding torch.

### Description of the reference numbers

- 1 =: welding torch
- 2 =: torch head
- 3 =: welding wire
- 4 =: contact chip
- 5 =: gas nozzle
- 5b =: tip portion of nozzle
- 6 =: base side nozzle
- 6a =: base portion
- 6b =: tip portion
- 7 =: tip side nozzle
- 7a =: base portion
- 7b =: tip portion of nozzle
- 8 =: band
- 11 =: vessel
- 12 =: oil
- W =: workpiece
- S =: spatters

### Detailed Description of the Invention

The embodiments of the gas nozzle for arc welding according to the present invention are explained by reference to drawings below.

### First Embodiment

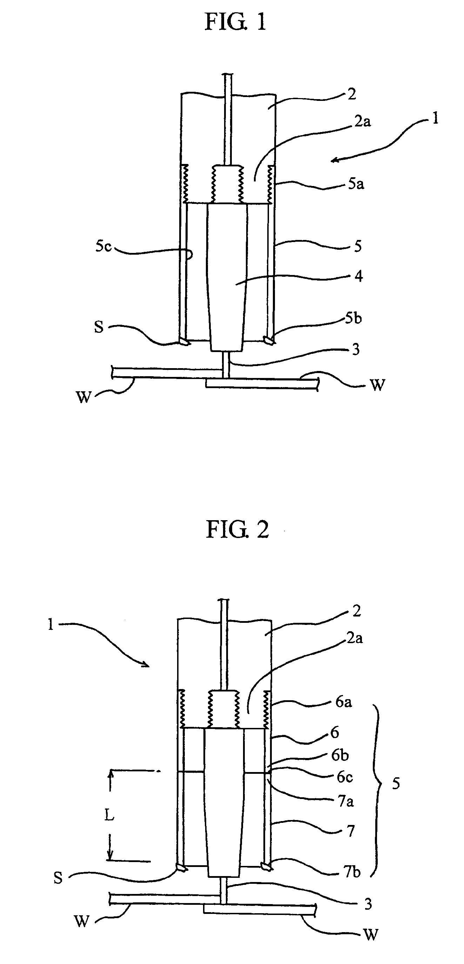

Fig. 1 is a schematic section view showing a welding torch provided with a gas nozzle according to a first embodiment of the invention.

In this welding torch 1, a contact tip 4 made of metal for feeding a welding wire 3 as a consumable electrode is removably screwed with a tip portion 2a of a torch head 2 of the welding torch, and simultaneously a gas nozzle 5, which is prepared so as to surround the contact tip 4 and so as to form a cylinder shape over the range from a base portion 5a of the nozzle 5 to a tip portion 5b of the nozzle 5 corresponding to a gas discharge side, is removably screwed with the tip portion 2a of the torch head 2.

Further, the welding wire 3 is used as a plus-side electrode, and a workpiece W as material to be welded is used as a minus-side electrode. Under such conditions, while an inert gas such as argon gas or CO₂ gas is fed as a shield gas to the torch, an arc is generated between the welding wire 3 and the workpiece W and heat by the arc melts the wire 3 to weld the workpieces W and W.

In the first embodiment, the whole of the gas nozzle 5 is formed from paper board as material that is capable of carbonizing owing to weld spatters adhered to the material and allowing the carbonized material together with the spatters to exfoliate and fall.

By using the gas nozzle 5 wholly formed from the paper board as above, when the spatters S are adhered to the nozzle tip portion 5b or the inner periphery surface 5c of the gas nozzle, the spatters-adhered portion are carbonized by heat of the spatters S and the carbonized portion exfoliates and falls together with the spatters, whereby the amount of the spatters deposited on the whole of the gas nozzle can be reliably reduced.

Hence, it is possible to avoid adhesion and deposition of the spatters S to the tip portion 5b and the inner periphery surface 5c of the gas nozzle 5, whereby inhibition of the flow of shield gas owing to the spatters S is solved. Thus, shielding by the shield gas is ensured to avoid occurrence of porosities such as blowholes, pinholes or pits, which enables improvement of welding quality.

Further, since the whole of the gas nozzle 5 is formed from paper board, the gas nozzle can be easily and cheaply prepared and simultaneously when proportion of carbonized area of the nozzle owing to adhesion of the spatters S is increased, the paper board only has to be replaced with a new one, and therefore it is possible to dispense with cleaning operation of the gas nozzle to greatly improve welding workability

For example, a welding torch 1 provided with the gas nozzle 5 of the first embodiment was used and separately a welding torch 21 provided with a conventional gas nozzle 25 shown in Fig. 6 was used, and then in each case two workpieces W and W having a thickness of 2.0 mm to 2.3 mm were welded under the conditions of a shield gas of CO₂, welding wires 3 and 23 having a diameter of 1.2 m, a welding electric current of 190 A and a welding voltage of 22 V.

As a result, the use of the welding torch 21 provided with the conventional gas nozzle 25 needs cleaning of the gas nozzle 25 at a welding length of 9.4 m, whereas the use of the welding torch 1 provided with the gas nozzle 5 of the first embodiment enables welding of a length of 18.8 m, which is twice as long as the former, without cleaning of the gas nozzle 5.

### Second Embodiment

Fig. 2 is a schematic section view showing a welding torch provided with a gas nozzle according to a second embodiment of the invention.

In the first embodiment, a gas nozzle 5 is structured as below. The gas nozzle 5 is composed of a cylinder-shaped base side nozzle 6 made of metal removably screwing the base portion 6a with the tip portion 2a of the torch head 2 by the tip portion 2a, and a tip side nozzle 7, which is adhered to an edge side 6c of a tip portion 6b of the base side nozzle 6 such that a base portion 7a can be removed, which comprises paper board as material that is capable of carbonizing owing to weld spatters adhered to the material and allowing the carbonized material together with the spatters to fall, and which is formed in the cylinder shape over the range of a base portion 7a of the nozzle to a tip portion 7b of the nozzle corresponding to a gas discharge side.

The constitution of the welding torch 1 other than the features mentioned above is the same as that of Fig. 1, and therefore the same reference numbers as those of Fig. 1 are given to the same constituent elements to omit their explanation.
Length L in an axis direction of the tip side nozzle 7 is set to, for example, approximately 30 mm.

As described above, only the tip side nozzle 7, which forms the nozzle tip portion 7b corresponding to the gas discharge side where the spatters S are easily adhered in the gas nozzle 5, is formed from paper board as the material that is capable of carbonizing owing to weld spatters adhered to the material and allowing the carbonized material together with the spatters to exfoliate and fall, whereby the deposited amount of the spatters S can be effectively reduced to ensure good shield property by shield gas which enables improvement of welding quality and workability, in the same manner as the first embodiment. Further, in case the carbonated amount is also increased by adhesion of the spatters S, the tip side nozzle only has to be changed with a new one without changing the base side nozzle 6 made of metal, which is a simple and cheap operation.

### Third Embodiment

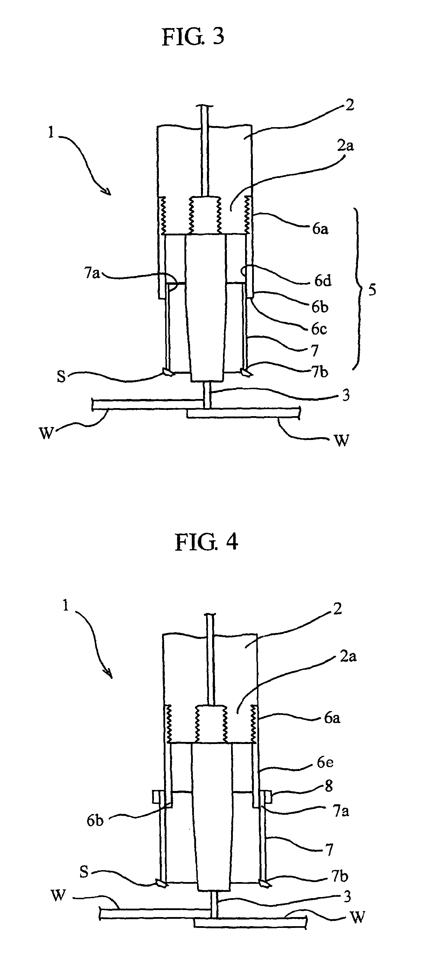

Fig. 3 is a schematic section view showing a welding torch provided with a gas nozzle according to a third embodiment of the invention.

In the second embodiment, a tip side nozzle 7 is structured as below. The base portion 7a of the tip side nozzle 7 is designed to be removably adhered to the inner periphery surface 6d of the tip portion 6b of the base side nozzle 6. The constitution of the welding torch 1 other than the features mentioned above is the same as that of Fig. 2, and therefore the same reference numbers as those of Fig. 2 are given to the same constituent elements to omit their explanation.

The third embodiment shows the same effects as in the second embodiment and further the insertion of the tip side nozzle 7 can be easily carried out compared with the structure obtained by adhering the tip side nozzle 7 to the edge side 6c of the base side nozzle 6 according to the second embodiment, whereby the tip side nozzle 7 can be smoothly changed to other one to bring about simple maintenance.

### Fourth Embodiment

Fig. 4 is a schematic section view showing a welding torch provided with a gas nozzle according to a fourth embodiment of the invention.

In the second embodiment, a base side nozzle 6 is structured as below. The base portion 7a of the tip side nozzle 7 is designed to be removably inserted to the outer periphery surface 6e of the tip portion 6b of the base side nozzle 6, and the outer periphery of tip side nozzle 7 is tightened and fixed by a band 8. The constitution of the welding torch 1 other than the features mentioned above is the same as that of Fig. 2, and therefore the same reference numbers as those of Fig. 2 are given to the same constituent elements to omit their explanation.

The fourth embodiment shows the same effects as in the second embodiment and further the tip side nozzle 7 is tightened and fixed on the outer periphery surface 6e of the tip portion 6b of the base side nozzle 6, and therefore the tip side nozzle 7 can be reliably and smoothly changed to other one compared with in the third embodiment.

For example, in the first embodiment, the gas nozzle 5 formed from paper board is impregnated with oil in a whole area or at least nozzle tip portion 5b of the gas nozzle 5. Further, at least nozzle tip portion 5b of the gas nozzle 5 can be impregnated at fixed intervals, for example one time per three welding operations, with oil 12, which is charged in a vessel 11 as shown in Fig. 5.

Otherwise, at least the nozzle tip portion 5b of the gas nozzle 5 can be impregnated with oil by spraying mists containing oil. Such impregnation of oil enables the reduction of the adhesion of spatters and the carbonization by the adhesion owing to the oil, which brings about longer operating life of the gas nozzle 5. Though the welding torch illustrated in Fig. 1 is shown in Fig. 5, the welding torch illustrated in Fig. 2, 3 or 4 is also used in Fig. 5 in the same manner.

Further examples of the material that is capable of carbonizing owing to weld spatters adhered to the material and allowing the carbonized material together with the spatters to exfoliate and fall include, in addition to paper board, woodfiber, nonwoven, and synthetic paper.

Furthermore, the gas nozzle of the invention has the nozzle tip portion on at least the gas discharge side consisting of the material that is capable of carbonizing owing to weld spatters adhered to the material and allowing the carbonized material together with the spatters to exfoliate and fall, and the nozzle tip portion shows insulation property. Hence the use of the gas nozzle has an advantage that the torch head supporting the contact tip and gas nozzle can be formed from a desired material such as insulating or conducting material.

## Claims

1. A gas nozzle removably attached to a tip portion (2a) of a torch head (2) of a welding torch so as to surround a contact tip (4) for feeding a welding wire, a tip portion (5b) on at least a gas discharge side of the gas nozzle (5) comprising material that is capable of carbonizing due to weld spatters adhered to the material and allowing the carbonized material together with the spatters to fall down,
**characterized in that** the material of the gas nozzle (5) has been impregnated with oil.

2. The gas nozzle according to claim 1,
wherein the entire gas nozzle (5) is formed from the material.

3. The gas nozzle according to claim 1 or 2,
wherein the material is paper board.

4. The gas nozzle according to any of claims 1 to 3,
which comprises a base side nozzle (6) made of metal and a tip side nozzle (7) made of the material, a base portion (6a) of the base side nozzle (6) being removably attached to the tip portion (2a) of a torch head (2) and a base portion (7a) of the tip side nozzle (7) being removably attached to the tip portion (6b) of the base side nozzle (6).

## Patentansprüche

1. Gasdüse, die an einem Endbereich (2a) eines Schweißbrennerkopfes (2) eines Schweißbrenners derart lösbar angebracht ist, daß sie eine Kontaktspitze (4) zum Zuführen von Schweißdraht umgibt, wobei ein Endbereich (5b) zumindest auf einer Gasaustrittsseite der Gasdüse (5) ein Material aufweist, das aufgrund von an dem Material anhaftenden Schweißspritzern verkohlen kann, wobei das verkohlte Material zusammen mit den Spritzern abfallen kann,
**dadurch gekennzeichnet,**
**daß** das Material der Gasdüse (5) mit Öl getränkt worden ist.

2. Gasdüse nach Anspruch 1,
wobei die gesamte Gasdüse (5) aus dem Material gebildet ist.

3. Gasdüse nach Anspruch 1 oder 2,
wobei es sich bei dem Material um Pappe oder Karton handelt.

4. Gasdüse nach einem der Ansprüche 1 bis 3,
die eine basisseitige Düse (6) aus Metall und eine endseitige Düse (7) aus dem Material aufweist, wobei ein Basisbereich (6a) der basisseitigen Düse (6) an dem Endbereich (2a) eines Schweißbrennerkopfes (2) lösbar angebracht ist und ein Basisbereich (7a) der endseitigen Düse (7) an dem Endbereich (6b) der basisseitigen Düse (6) lösbar angebracht ist.

## Revendications

1. Buse à gaz attachée de façon amovible sur une portion d'embout (2) d'une tête de torche (2) d'une torche de soudage de manière à entourer un embout de contact (4) pour alimenter un fil de soudage, une portion d'embout (5b) sur au moins un côté de décharge de gaz de la buse à gaz (5) comprenant un matériau qui est capable de se carboniser en raison à des projections de soudure qui adhèrent sur le matériau et qui permet au matériau carbonisé de tomber conjointement avec les projections,
**caractérisée en ce que** le matériau de la buse à gaz (5) a été imprégné avec de l'huile.

2. Buse à gaz selon la revendication 1,
dans laquelle la totalité de la buse à gaz (5) est formée à partir du matériau.

3. Buse à gaz selon la revendication 1 ou 2,
dans laquelle le matériau est du carton.

4. Buse à gaz selon l'une quelconque des revendications 1 à 3,
qui comprend une buse côté base (6) réalisée en métal et une buse côté embout (7) réalisée avec ledit matériau, une portion de base (6a) de la buse côté base (7) étant attachée de manière amovible sur la portion d'embout (2a) de la tête de torche (2) et une portion de base (7a) de la buse côté embout (7) étant attachée de façon amovible sur la portion d'embout (6b) de la buse côté base (6).
